# EUROPÄISCHE PATENTSCHRIFT

(11) **EP 3 536 735 B1**
(45) Veröffentlichungstag und Bekanntmachung des Hinweises auf die Patenterteilung: **14.10.2020**
(21) Anmeldenummer: 18159849.1
(22) Anmeldetag: 05.03.2018
(51) Int. Cl.: C08G 77/46, C08L 83/12

(54) **VERNETZTE POLYETHER-SILOXAN BLOCK-COPOLYMERE SOWIE DEREN VERWENDUNG ZUR HERSTELLUNG VON POLYURETHANSCHAUMSTOFFEN**
CROSSLINKED POLYETHER SILOXANE BLOCK COPOLYMERS AND THEIR USE IN THE PREPARATION OF POLYURETHANE FOAMS
COPOLYMÈRES BLOC DE POLYÉTHER-SILOXANE RÉTICULÉS AINSI QUE LEUR UTILISATION POUR LA FABRICATION DE MOUSSES EN POLYURÉTHANE

(43) Veröffentlichungstag der Anmeldung: 11.09.2019
(73) Patentinhaber: Evonik Operations GmbH, 45128 Essen (DE)
(72) Erfinder: KLOSTERMANN, Michael, 45141 Essen (DE); FERENZ, Michael, 45147 Essen (DE); FELDMANN, Kai-Oliver, 45133 Essen (DE); JANSEN, Marvin, 45277 Essen (DE); FLUDER, Michelle, 44388 Dortmund (DE); ARNOLD, Sina, 46244 Bottrop (DE); SCHNELL, Petra, 45276 Essen (DE)
(74) Vertreter: Evonik Patent Association

(56) Entgegenhaltungen:
- DE-T2- 69 923 992

## Beschreibung

Die vorliegende Erfindung liegt auf dem Gebiet von Polyethersiloxanen, Schaumstoffen und Polyurethanschäumen.

Sie betrifft insbesondere die Verwendung von blockartig aufgebauten Polyether-Siloxan Copolymeren zur Herstellung von Polyurethanschaumstoffen, bevorzugt von mechanisch geschäumten Polyurethanschaumstoffen.

Mechanisch aufgeschäumte Polyurethanschaumstoffe werden ohne die Verwendung eines physikalischen oder chemischen Treibmittels hergestellt und finden breite Anwendung in verschiedensten Beschichtungsprozessen. So werden sie z.B. zur Rückseitenhinterschäumung von Teppichen und Kunstrasen, zur Herstellung von Flächendichtungen, als Trittschalldämmung für Bodenbeläge sowie im Bereich Klebebeschichtungen verwendet. Die Herstellung entsprechender Schaumstoffe erfolgt typischer Weise durch mechanisches Aufschäumen eines Polyol-Isocyanat-Gemisches, wobei Luft oder Stickstoff unter hohem Schereintrag in die Polyol-Isocyanat-Mischung eingeschlagen werden. Die so hergestellte Schaummasse kann anschließend auf ein beliebiges Substrat, z.B. eine Teppichrückseite, gestrichen und bei erhöhten Temperaturen ausgehärtet werden. Bedingt durch ihre Herstellung werden mechanisch aufgeschäumte Polyurethanschäume in Fachkreisen auch als Schlagschäume bezeichnet.

Für alle oben genannten Anwendungen ist hierbei wichtig, dass während des mechanischen Aufschäumens ein möglichst feinzelliger Schaum erhalten wird. Zusätzlich ist erforderlich, dass der Schaum eine hohe Stabilität aufweist, da so Schaumdefekte während des anschließenden Beschichtungs- und Trocknungsvorgangs vermieden werden können. Aus diesem Grund ist es üblich, der Polyol-Isocyanat-Mischung vor bzw. während des mechanischen Aufschäumens Schaumstabilisatoren zuzusetzen, wobei sich für diese Anwendung insbesondere Polyether-Siloxan Block-Copolymere als besonders effizient erwiesen haben. In der Regel zeichnen sich diese Stabilisatoren durch eine lineare [AB]ₙ Blockstruktur aus alternierenden Polyether- und Siloxanketten aus. Die Wirksamkeit als Schaumstabilisator ist hierbei umso höher, je höher das Molekulargewicht dieser Verbindungen ist, wobei Molmassen von mehr als 60.000 g/mol keine Seltenheit sind.

In den meisten Fällen werden zur Herstellung mechanisch aufgeschäumter Polyurethanschäume SiOC-basierte Polyether-Siloxan Block-Copolymere verwendet. Das sind Polymere, in welchen Polyether- und Siloxan-Blöcke über eine Silizium-Sauerstoff-Kohlenstoffbindung miteinander verknüpft sind. Solche Strukturen sind beispielsweise in den Schriften US 3836560 oder US 4002941 beschrieben. Die Verwendung von SiOC-basierten Block-Copolymeren geht hierbei mit einer Reihe an Nachteilen einher. Hervorzuheben ist insbesondere eine geringe Hydrolysestabilität solcher Polyethersiloxane, was negative Einflüsse auf deren Lagerstabilität, insbesondere in vorab formulierten Polyolabmischungen, haben kann. Darüber hinaus sind SiOC-basierte Polyether-Siloxan Block-Copolymere mit ausreichend hohen Molmassen nur über aufwendige Herstellungsprozesse zugänglich, wodurch es schwer ist, solche Strukturen in gleichbleibend hoher Qualität herzustellen.

Zur Vermeidung der mit SiOC basierten Strukturen einhergehenden Nachteilen wurden in der Vergangenheit außerdem eine Reihe SiC-basierte Polyether-Siloxan Block-Copolymere entwickelt, in welchen Polyether- und Siloxan-Blöcke über eine Silizium- Kohlenstoffbindung miteinander verknüpft sind. Solche Strukturen sind zum Beispiel in den Schriften US 4150048 oder US 5869727 beschrieben. Vorteile dieser Verbindungsklasse sind eine deutlich erhöhte Hydrolysestabilität sowie die Tatsache, dass solche Moleküle synthetisch prinzipiell leichter zugänglich sind und daher besser in gleichbleibender Qualität hergestellt werden können. SiC-basierte Polyether-Siloxan Block-Copolymere lassen sich üblicher Weise durch Hydrosilylierung von alpha-omega modifizierten Wasserstoff-Siloxanen mit alpha-omega modifizierten Di-(Meth)Allyl-Polyethern herstellen. Für die Bereitstellung von Block-Copolymeren mit ausreichend hohem Molekulargewicht ist es hierbei wichtig, dass die Kettenenden des verwendeten Polyethers nahezu vollständig mit (Meth)Allyl-Gruppen modifiziert sind und keine bzw. kaum endständige OH-Gruppen aufweisen. Zudem müssen Umlagerungen der Polyether-gebundenen (Meth)Allyl-Doppelbindungen auf ein Minimum reduziert werden, da die Doppelbindungen hierdurch unreaktiv gegenüber einer Hydrosilylierung würden. Aufgrund der sehr geringen Umlagerungsneigung von methallylischen Doppelbindungen sind in diesem Zusammenhang Di-Methallyl-modifizierte gegenüber Di-Allyl-modifizierten Polyethern zur Herstellung von hochmolekularen Polyether-Siloxan Block-Copolymere zu bevorzugen.

Allerdings können unvollständige Modifizierungen sowie Umlagerungen am Polyether jedoch nie vollständig vermieden werden, so dass es bei der Herstellung von SiC-basierten, linearen [AB]ₙ Polyether-Siloxan Block-Copolymeren stets zu Kettenabbrüchen kommt, wodurch das synthetisch zugängliche Molgewicht limitiert ist. Wie bereits beschrieben, ist ein hohes Molgewicht für die Bereitstellung von besonders wirksamen Schaumstabilisatoren für mechanisch geschäumte Polyurethanschäume jedoch besonders wichtig. Aufgabe der vorliegenden Erfindung war daher die Bereitstellung von Polyether-Siloxan Block-Copolymeren, welche die Vorteile von SiC- gegenüber SiOC-basierten Strukturen aufweisen, sich jedoch zusätzlich durch ein besonders hohes Molekulargewicht und hiermit verbunden eine besonders effiziente Wirksamkeit als Schaumstabilisator auszeichnen. Überraschenderweise wurde gefunden, dass die Verwendung von vernetzten Polyether-Siloxan Block-Copolymeren die Lösung der genannten Aufgabe ermöglicht.

DE 699 23 992 T2 offenbart ein Polyethersiloxan-Blockcopolymer, erhältlich durch die Umsetzung a) eines alpha-omega Wasserstoff-Siloxans, b) sowie eines höherwertigen Wasserstoff-Siloxans mit mindestens einem Polyether in Gegenwart eines Hydrosilylierungskatalysators.

Gegenstand der vorliegenden Erfindung ist daher die Verwendung vernetzter Polyether-Siloxan Block-Copolymerezur Herstellung von Polyurethanschäumen, bevorzugt zur Herstellung von mechanisch geschäumten Polyurethanschäumen.

Die erfindungsgemäßen vernetzten Polyether-Siloxan Block-Copolymere haben überraschenderweise mannigfaltige Vorteile.

Ein Vorteil der erfindungsgemäßen vernetzten Polyether-Siloxan Block-Copolymere ist, dass sie über ein einfach durchzuführendes Herstellverfahren zugänglich sind, wobei es möglich ist, solche Strukturen auch ihn größeren Mengen in gleichbleibender Qualität herzustellen.

Noch ein Vorteil der erfindungsgemäßen vernetzten Polyether-Siloxan Block-Copolymere ist, dass durch sie Polyether-Siloxan Block-Copolymere mit sehr hohen Molgewichten zugänglich sind.

Das synthetisch leicht zugängliche hohe Molgewicht ist hierbei insbesondere für die erfindungsgemäße Verwendung der beschriebenen Polyether-Siloxan Block-Copolymere als Schaumstabilisator zur Herstellung von Polyurethanschäumen, insbesondere von Polyurethan-Schlagschäumen, vorteilhaft, weil sich hierdurch besonders feinzellige und stabile Schäume herstellen lassen. Auch ist hierdurch ein besonders effizientes mechanisches Aufschäumen von Polyol-Isocyanat-Gemischen möglich, was wiederum eine Reihe prozesstechnischer Vorteile bei der Herstellung von Polyurethan-Schlagschäumen mit sich bringt.

Ein weiterer Vorteil der erfindungsgemäßen Polyether-Siloxan Block-Copolymere ist, dass sie eine hohe Hydrolysestabilität aufweisen. Hierdurch weisen entsprechende Strukturen eine hohe Lagerstabilität auf, was vor allem in vorab formulierten Polyolabmischungen erhebliche Vorteile mit sich bringt.

Der Begriff Polyether umfasst im Sinne der gesamten vorliegenden Erfindung Polyoxyalkylene, wobei insbesondere Polyoxyethylen und Polyoxypropylen sowie Polyoxyethylen-Polyoxypropylen-Mischpolyether bevorzugt sind. Die Verteilung verschiedener Oxyalkylen-Einheiten entlang des Polymerrückgrades kann unterschiedlich sein. Mischpolyether können zum Beispiel statistisch, blockweise oder mit unterschiedlichen Gradienten der Monomereinheiten zueinander aufgebaut sein. Statistischer Aufbau bedeutet in diesem Zusammenhang, das Polyoxyethylen- und Polyoxypropylen-Einheiten in zufälliger Reihenfolge über die Polyetherkette verteilt sind, wohingegen ein blockweise aufgebauter Polyether aus definierten Polyoxyethylen- und Polyoxypropylen-Blöcken besteht.

Der Begriff Siloxan umfasst im Sinne der gesamten vorliegenden Erfindung Verbindungen aus der Klasse der Polyorganosiloxane, insbesondere bevorzugt aus der Klasse der Polydimethyl-Siloxane.

Der Begriff Polyether-Siloxan Block-Copolymere umfasst im Sinne der gesamten vorliegenden Erfindung Polymere, welche aus alternierenden Polyether- und Siloxan-Blöcken aufgebaut sind. Diese Strukturen können hierbei sowohl linear als auch verzweigt sein.

Der Begriff Polyurethanschaum ist dem Fachmann an sich bekannt (siehe z.B. Adam et al., "Polyurethanes", Ullmann's Encyclopedia of Industrial Chemistry - Paragraph 7", 2012, Wiley VCH-Verlag, Weinheim). Der Begriff Polyurethan-Schlagschaum umfasst im Sinne der gesamten vorliegenden Erfindung Polyurethan-Schäume, welche durch mechanisches Einschlagen von Luft / Stickstoff in eine Polyol-Isocyanat-Mischung hergestellt werden, wobei nur geringe Mengen, bevorzugt gar kein zusätzliches physikalisches oder chemisches Treibmittel verwendet werden. Er ist gleichbedeutend mit dem Begriff mechanisch aufgeschäumter Polyurethanschaum.

Die erfindungsgemäßen Polyether-Siloxan Block-Copolymere basieren auf SiC-Chemie und lassen sich durch Hydrosilylierung von alpha-omega modifizierten Wasserstoff-Siloxanen, höherwertigen seitenständigen oder verzweigten Wasserstoff-Siloxanen sowie alpha-omega modifizierten Di-(Meth)Allyl-Polyethern herstellen. Die dieser Herstellung zugrundeliegenden chemischen Reaktionen sind in der Fachliteratur bekannt und dort ausführlich beschrieben (siehe z.B. Silicones - Chemistry and Technology, Vulkan-Verlag Essen, 1989).

Die Erfindung wird nachfolgend weiter und beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere in Bezug auf den Sachverhalt, in dessen Zusammenhang das Dokument zitiert wurde, vollständig zum Offenbarungsgehalt der vorliegenden Erfindung gehören. Bei Prozentangaben handelt es sich, wenn nicht anders angegeben, um Angaben in Gewichtsprozent. Werden nachfolgend Parameter angegeben, die durch Messung bestimmt wurden, so wurden die Messungen, wenn nicht anders angegeben, bei einer Temperatur von 25°C und einem Druck von 101.325 Pa durchgeführt. Werden in der vorliegenden Erfindung chemische (Summen-)Formeln verwendet, so können die angegebenen Indizes sowohl absolute Zahlen als auch Mittelwerte darstellen. Bei polymeren Verbindungen stellen die Indizes vorzugsweise Mittelwerte dar. In der vorliegenden Erfindung dargestellte Struktur und Summenformeln stehen stellvertretend für alle durch unterschiedliche Anordnung der sich wiederholenden Einheiten denkbaren Isomere. Werden im Rahmen der vorliegenden Erfindung Verbindungen, wie z. B. Polyether, Siloxane oder Polyethersiloxane, beschrieben, die verschiedene Einheiten mehrfach aufweisen können, so können diese statistisch verteilt (statistisches Oligomer oder Polymer), geordnet (Blockoligomer oder Blockpolymer) oder als Gradientenverteilung in diesen Verbindungen vorkommen.

Gegenstand der Erfindung ist die Verwendung von Polyether-Siloxan Block-Copolymeren, welche zugänglich sind durch die Umsetzung
a) mindestens eines alpha-omega Wasserstoff-Siloxans der allgemeinen Formel (1) 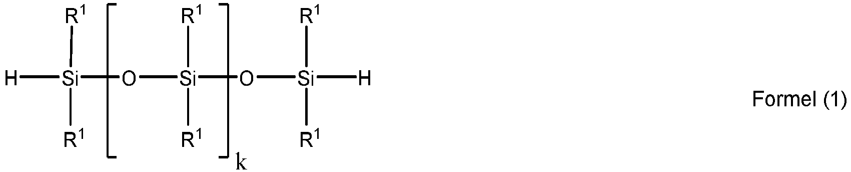 wobei
   k = 1 bis 100, bevorzugt 5 bis 50 besonders bevorzugt 7 bis 30 ganz besonders bevorzugt 8-20 ist und
   wobei die Reste R¹ unabhängig voneinander gleiche oder verschiedene einwertige aliphatische oder aromatische Kohlenwasserstoffreste mit 1 bis 20 Kohlenstoffatomen, bevorzugt mit 1 bis 10 Kohlenstoffatomen, ganz besonders bevorzugt Methylreste sind,
b) sowie mindestens eines höherwertigen Wasserstoff-Siloxans der allgemeinen Formel (2) 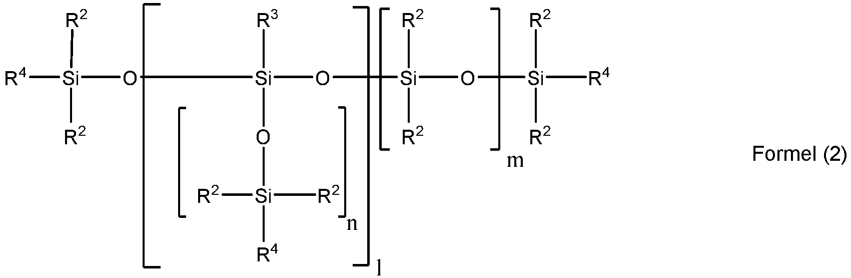 wobei
   l = 1 bis 10, bevorzugt 1 bis 5 besonders bevorzugt 1
   m = 0 bis 100, bevorzugt 5 bis 50, besonders bevorzugt 7 bis 30, ganz besonders bevorzugt 8-20 n = 0 bis 100, bevorzugt 0 - 50, besonders bevorzugt 0 ist und
   wobei die Reste R² unabhängig voneinander gleiche oder verschiedene einwertige aliphatische oder aromatische Kohlenwasserstoffreste mit 1 bis 20 Kohlenstoffatomen, bevorzugt mit 1 bis 10 Kohlenstoffatomen, ganz besonders bevorzugt Methylreste sind, und
   wobei die Reste R³ unabhängig voneinander gleiche oder verschiedene einwertige aliphatische oder aromatische Kohlenwasserstoffreste mit 1 bis 20 Kohlenstoffatomen, bevorzugt Methyl- oder Phenylreste sind, und
   wobei die Reste R⁴ unabhängig voneinander gleiche oder verschiedene einwertige aliphatische oder aromatische Kohlenwasserstoffreste mit 1 bis 20 Kohlenstoffatomen, oder H sind, unter der Maßgabe, dass mindestens drei, vorzugsweise alle Reste R⁴ Wasserstoffatome sind,
c) mit mindestens einem Polyether der allgemeinen Formel (3) 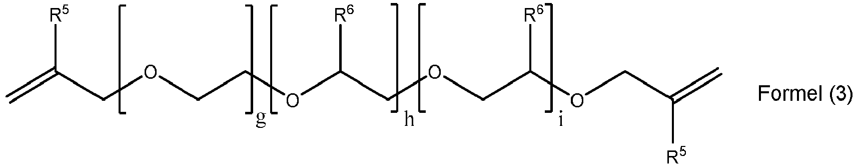 wobei
   g = 0 bis 100, bevorzugt 5 bis 75, besonders bevorzugt 10 bis 50
   h = 0 bis 100, bevorzugt 5 bis 75, besonders bevorzugt 5 bis 25
   i = 0 bis 100, bevorzugt 5 bis 75, besonders bevorzugt 5 bis 25 und
   wobei die Reste R⁵ unabhängig voneinander gleiche oder verschiedene einwertige aliphatische gesättigte oder ungesättigte Kohlenwasserstoffreste mit 1 bis 20 Kohlenstoffatomen oder H sind, wobei insbesondere Methylreste bevorzugt sind, und wobei die Reste R⁶ unabhängig voneinander gleiche oder verschiedene einwertige aliphatische oder aromatische Kohlenwasserstoffreste mit 1 bis 20 Kohlenstoffatomen, bevorzugt Methylreste sind,

in Gegenwart eines Hydrosilylierungskatalysators (d), wobei die Reaktion optional, vorzugsweise obligatorisch in einem Lösemittel (e) durchgeführt wird, als Additiv zur Herstellung von Polyurethanschäumen Die erfindungsgemäßen Polyether-Siloxan Block-Copolymere sind vernetzt. Die vorgenannte Umsetzung als solche, also das Verfahren zur Herstellung der Polyether-Siloxan Block-Copolymere, wird ebenfalls beschrieben.

Die Darstellung der erfindungsgemäßen vernetzten Polyether-Siloxan Block-Copolymere erfolgt also in Gegenwart eines Hydrosilylierungskatalysators, welcher die Ausbildung einer SiC-Bindung durch Anlagerung einer Si-H-Gruppe an eine (meth)allylische Doppelbindung zu katalysieren vermag. Hierbei sind insbesondere Katalysatoren ausgewählt aus der Gruppe der Platin-Katalysatoren, insbesondere der Platin(0)-Katalysatoren bevorzugt, wobei insbesondere Platin(0)-Katalysatoren in Form des Karstedt-Katalysators (Lewis et al., "Platinum Catalysts used in Silicones Industry", Platinum Metal Review, 1997, 44(23), 66-74) ganz besonders bevorzugt sind.

Bei der Herstellung der erfindungsgemäßen vernetzten Polyether-Siloxan Block-Copolymere ist es im Rahmen der vorliegenden Erfindung bevorzugt, dass das höherwertige Wasserstoff-Siloxan (b) in einer Konzentration von 3 - 25, bevorzugt von 5 - 20, besonders bevorzugt von 7,5 - 15 mol-% bezogen auf die Mischung der beiden Wasserstoff-Siloxane (a) und (b) eingesetzt wird.

Es entspricht einer weiteren, ebenfalls bevorzugten Ausführungsform der vorliegenden Erfindung, wenn zur Herstellung der erfindungsgemäßen vernetzten Polyether-Siloxan Block-Copolymere das alpha-omega Wasserstoff-Siloxan der allgemeinen Formel (1) und das höherwertige Wasserstoff-Siloxans der allgemeinen Formel (2) nicht separat vorgelegt werden, sondern durch Equilibrierung direkt eine Siloxanmischung enthaltend alpha-omega Wasserstoff-Siloxane und höherwertige Wasserstoff-Siloxane hergestellt wird, welche dann direkt mit einem Polyether der allgemeinen Formel (3) umgesetzt wird. Entsprechende Equilibrierungsmethoden zur Herstellung einer entsprechenden Siloxanmischung sind dem Fachmann bekannt und zum Beispiel in "Silicones - Chemistry and Technology" (Vulkan-Verlag Essen, 1989) beschrieben. Diese Siloxanmischung wird dann direkt mit einem Polyether der allgemeinen Formel (3) umgesetzt. Hierbei sind insbesondere solche Siloxanmischung bevorzugt, welche der allgemeinen Formel (4) entsprechen: 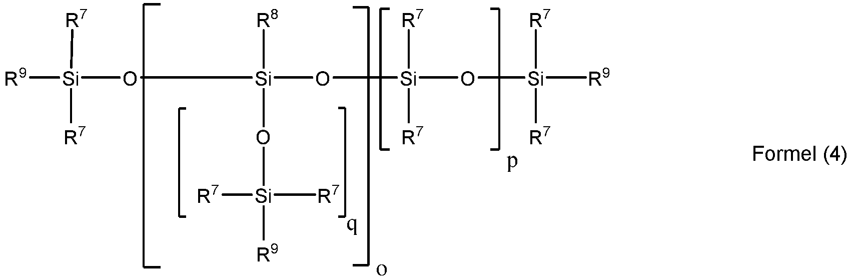 wobei
o = 0,01 bis 0,7, bevorzugt 0,05 bis 0,5 besonders bevorzugt 0,075 bis 0,25
p = 0 bis 100, bevorzugt 5 bis 50, besonders bevorzugt 7 bis 30 ganz besonders bevorzugt 8-20
q = 0 bis 100, bevorzugt 0 - 50, besonders bevorzugt 0 ist und
wobei die Reste R⁷ unabhängig voneinander gleiche oder verschiedene einwertige aliphatische oder aromatische Kohlenwasserstoffreste mit 1 bis 20 Kohlenstoffatomen, bevorzugt mit 1 bis 10 Kohlenstoffatomen, ganz besonders bevorzugt Methylreste sind, und
wobei die Reste R⁸ unabhängig voneinander gleiche oder verschieden einwertige aliphatische oder aromatische Kohlenwasserstoffreste mit 1 bis 20 Kohlenstoff-atomen, bevorzugt Methyl- oder Phenylreste sind, und
wobei die Reste R⁹ unabhängig voneinander gleiche oder verschiedene einwertige aliphatische oder aromatische Kohlenwasserstoffreste mit 1 bis 20 Kohlenstoffatomen, oder H sind, unter der Maßgabe, dass mindestens 50 %, bevorzugt 65 %, besonders bevorzugt mindestens 80 % der Reste R⁹ Wasserstoffatome sind.

Weiterhin ist es im Rahmen der vorliegenden Erfindung bevorzugt, wenn bei der Herstellung der erfindungsgemäßen vernetzten Polyether-Siloxan Block-Copolymere der Polyether (c) in einer solchen Konzentration eingesetzt wird, dass das molare Verhältnis an polyether-gebundenden Doppelbindungen zu siloxan-gebundenen Si-H-Gruppen im Bereich von 0,95 : 1,05, bevorzugt im Bereich von 0,97 : 1,03, besonders bevorzugt im Bereich von 0,99 : 1,01 liegt.

Im Rahmen der vorliegenden Erfindung sind weiterhin solche vernetzten Polyether-Siloxan Block-Copolymere bevorzugt, welche ein mittleres Molgewicht *M*_{w} von mindestens 60.000 g/mol, bevorzugt von min. 70.000 g/mol, besonders bevorzugt von min. 80.000 g/mol, aufweisen. Das mittlere Molgewicht *M*_{w} lässt sich hierbei bevorzugt durch Gel-Permeations-Chromatopgraphie (GPC) bestimmen. Hierfür kann beispielsweise das GPC-System *SECcurity²* der Firma *PCC*, kalibriert gegen Polypropylenglykol, verwendet werden.

Die erfindungsgemäßen vernetzten Polyether-Siloxan Block-Copolymere können, bedingt durch ihr hohes Molekulargewicht, eine hohe Viskosität aufweisen. Daher kann es vorteilhaft sein, wenn die Polyether-Siloxan Block-Copolymere verdünnt in einem geeigneten Lösemittel vorliegen. Hierbei kann die Herstellung der Polyether-Siloxan Block-Copolymere direkt in einem Lösemittel erfolgen, sie können jedoch auch nachträglich mit diesem verdünnt bzw. abgemischt werden. Polyether-Siloxan Block-Copolymere, welche direkt in einem Lösemittel hergestellt wurden, sind hierbei im Rahmen der vorliegenden Erfindung besonders bevorzugt. In diesem Zusammenhang sind insbesondere Alkylbenzole, Alkohole, vorzugsweise mit mindestens 10 Kohlenstoffatomen, langkettige FettsäureEster, Polyether, sowie Mischungen dieser Substanzen als Lösemittel bevorzugt, wobei insbesondere Isotridecanol, Dodecanol sowie Isopropylstearat ganz besonders bevorzugte Lösemittel sind.

Liegen die erfindungsgemäßen vernetzten Polyether-Siloxan Block-Copolymere verdünnt in einem Lösemittel vor, ist es im Rahmen der vorliegenden Erfindung besonders bevorzugt, wenn die Konzentration des Polyether-Siloxan Block-Copolymers im Bereich von 5 - 95 Gew.-%, weiter bevorzugt von 10 - 90 Gew.-%, besonders bevorzugt von 20 - 80 Gew.-%, insbesondere bevorzugt von 30 - 70 Gew.-%, bezogen auf die Mischung von Copolymer und Lösemittel, liegt.

Da, wie oben beschrieben, die erfindungsgemäßen vernetzten Polyether-Siloxan Block-Copolymere effiziente Stabilisatoren für die Herstellung von Polyurethan-Schäumen, insbesondere von Polyurethan-Schlagschäumen sind, ist die Verwendung der erfindungsgemäßen Polyether-Siloxan Block-Copolymeren als Additive zur Herstellung entsprechender Schäume der Gegenstand der vorliegenden Erfindung.

Hierbei ist es im Rahmen der vorliegenden Erfindung bevorzugt, wenn bei der Herstellung von Polyurethanschäumen, insbesondere von Polyurethan-Schlagschäumen, die erfindungsgemäßen Polyether-Siloxan Block-Copolymere in einer Konzentration von 0,05 - 10 Gew.-%, bevorzugt von 0,1 - 7,5 Gew.-%, besonders bevorzugt von 0,2 - 5 Gew.-%, bezogen auf die gesamte Schaumzusammensetzung, eingesetzt werden.

Der Begriff Polyurethanschaum bezeichnet in diesem Zusammenhang Schaumstoffe, welche durch Umsetzung von Polyisocyanaten mit ihnen gegenüber reaktiven Verbindungen, bevorzugt mit OH-Gruppen ("Polyole") und/oder NH-Gruppen, gebildet werden (Adam et al., "Polyurethanes", Ullmann's Encyclopedia of Industrial Chemistry", 2012, Wiley VCH-Verlag, Weinheim). Polyole zur Herstellung entsprechender Schäume sind an sich bekannt. Besonders geeignete Polyole im Sinne dieser Erfindung sind alle organischen Substanzen mit mehreren gegenüber Isocyanaten reaktiven Gruppen sowie deren Zubereitungen. Bevorzugte Polyole sind alle zur Herstellung von Polyurethan-Schäumen üblicherweise verwendeten Polyetherpolyole und Polyesterpolyole. Polyetherpolyole können durch Umsetzung von mehrwertigen Alkoholen oder Aminen mit Alkylenoxiden gewonnen werden.

Polyesterpolyole basieren auf Estern mehrwertiger Carbonsäuren (meist Phthalsäure, Adipinsäure oder Terephthalsäure) mit mehrwertigen Alkoholen (meist Glycolen).

Isocyanate zur Herstellung von Polyurethan-Schäumen sind an sich ebenfalls bekannt. Vorzugsweise weist die Isocyanat-Komponente ein oder mehrere organische Isocyanate mit zwei oder mehr Isocyanat-Funktionen auf. Geeignete Isocyanate im Sinne dieser Erfindung sind z. B. alle mehrfunktionalen organischen Isocyanate, wie beispielsweise 4,4'-Diphenylmethandiisocyanat (MDI), Toluoldiisocyanat (TDI), Hexamethylendiisocyanat (HMDI) und Isophorondiisocyanat (IPDI). Besonders geeignet sind weiterhin Isocyanat-basierte Prepolymere, insbesondere MDI-basierte Prepolymere.

Das Verhältnis von Isocyanat zu Polyol, ausgedrückt als NCO-Index, liegt im Rahmen der vorliegenden Erfindung vorzugsweise im Bereich von 40 bis 500, bevorzugt 60 bis 350, besonders bevorzugt 80 - 120. Der NCO-Index beschreibt dabei das Verhältnis von tatsächlich eingesetztem Isocyanat zu berechnetem Isocyanat (für eine stöchiometrische Umsetzung mit Polyol). Ein NCO-Index von 100 steht für ein molares Verhältnis der reaktiven Gruppen von 1 zu 1.

Neben den erfindungsgemäßen vernetzten Polyether-Siloxan Block-Copolymere können die Polyurethanstoffe noch weitere Additive und Zusatzstoffe, wie z.B. Füllstoffe, Treibmittel, Katalysatoren, organische und anorganische Pigmente, Stabilisatoren, wie z.B. Hydrolyse- oder UV-Stabilisatoren, Antioxidantien, Absorber, Vernetzer, Farbstoffe oder Verdicker / Rheologie-Additive enthalten.

Weiterhin kann bei der Herstellung von Polyurethanschäumen, insbesondere von Polyurethan-Schlagschäumen, neben den erfindungsgemäßen vernetzten Polyether-Siloxan Block-Copolymeren noch mindestens ein weiteres Polyethersiloxan der allgemeinen Formel (5) als Additiv eingesetzt werden: 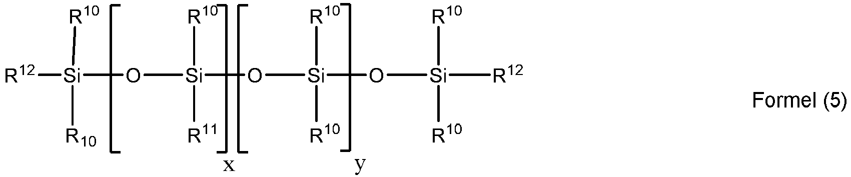 wobei
x = 0 bis 50, bevorzugt 1 bis 25, besonders bevorzugt 2 bis 15
y = 0 bis 250, bevorzugt 5 bis 150, besonders bevorzugt 5 bis 100
wobei die Reste R¹⁰ unabhängig voneinander gleiche oder verschiedene einwertige aliphatische oder aromatische Kohlenwasserstoffreste mit 1 bis 20 Kohlenstoffatomen, bevorzugt mit 1 bis 10 Kohlenstoffatomen, ganz besonders bevorzugt Methylreste sind, und wobei die Reste R¹¹ unabhängig voneinander gleiche oder verschiedene Polyoxyalkylenreste, vorzugsweise Polyoxyethylenpolyoxypropylenreste, bevorzugt mit 2 - 100, besonders bevorzugt mit 4 - 75 Oxyalkyleneinheiten sind, und wobei die Reste R¹² entweder R¹⁰ oder R¹¹ entsprechen. Polyoxyalkylenreste können hierbei sowohl OH-funktionell als auch terminiert sein, wobei in diesem Fall insbesondere Methyl-terminierte und Acetyl-terminierte Polyoxyalkylenreste bevorzugt sind.

In diesem Zusammenhang ist es besonders bevorzugt, wenn das Polyethersiloxan der allgemeinen Formel (5) in einer Konzentration von 10 - 90 Gew.-%, bevorzugt von 20 - 80 Gew.-%, ganz besonders bevorzugt von 30 - 70 Gew.-%, bezogen auf die Mischung von Polyethersiloxan-Block-Copolymers und Polyethersiloxan der allgemeinen Formel (5), eingesetzt wird.

Als Katalysatoren zur Herstellung von Polyurethan-Schäumen, insbesondere von Polyurethan-Schlagschäumen im Sinne der vorliegenden Erfindung sind Gel-Katalysatoren, die die Polyurethanreaktion zwischen Isocyanat und Polyol katalysieren, besonders geeignet. Diese können ausgewählt sein aus der Klasse der Amin-Katalysatoren, wie z.B. Triethylamin, Dimethylcyclohexylamin, Tetramethylethylendiamin, Tetramethylhexandiamin, Pentamethyldiethylentriamin, Pentamethyldipropylentriamin, Triethylendiamin, Dimethylpiperazin, 1,2-Dimethylimidazol, N-Ethylmorpholin, Tris(dimethylaminopropyl)hexahydro-1,3,5-triazin, Dimethylaminoethanol, Dimethylaminoethoxyethanol, Tetramethylguanidin, und 1,8-Diazabicyclo[5.4.0]undec-7-en. Weiterhin können Aminkatalysatoren ausgewählt sein aus der Klasse der sogenannten emissionsfreie Aminkatalysatoren, welche dadurch gekennzeichnet sind, dass sie ein katalytisch aktives Stickstoffatom und eine gegenüber NCO-Gruppen reaktive Gruppe, wie z.B. eine OH-Gruppe aufweisen. Entsprechende emissionsfreie Aminkatalysatoren werden Beispielsweise unter der Produktreihe Dabco NE von der Firma Evonik vertrieben. Weiterhin können die Katalysatoren ausgewählt sein aus der Klasse der Metall-Katalysatoren, wie z.B. Zinn, Zink, Bismuth, Eisen, Kupfer oder Zirkonium-basierte Katalysatoren. Metallkatalysatoren können hierbei in Form von Salzen oder als organisch modifizierte Katalysatoren wie z.B. Zinnlaurat, Zinnoctoat, Zinnneodecanoat, oder Nickel- und Kupfer-Acetylacetonat vorliegen. Die oben genannten Katalysatoren können sowohl pur als auch als Katalysatormischungen verwendet werden. Im Fall von Polyurethan-Schlagschäumen, sind thermolatente Katalysatoren, sprich Katalysatoren, die ihre Wirksamkeit erst ab einer bestimmten Aktivierungstemperatur entfalten und so ein verzögertes Aushärten der Schäume ermöglichen, besonders geeinigt.

Im Rahmen der vorliegenden Erfindung handelt es sich bei den Polyurethanschäumen bevorzugt um Polyurethan-Schlagschäume, welche durch mechanisches Aufschlagen der Polyol-Isocyanat-Mischung hergestellt werden. Bevorzugt enthalten solche Schlagschäume weniger als 2 Gew.-%, besonders bevorzugt weniger als 1 Gew.-%, insbesondere bevorzugt weniger als 0,5 Gew.-%, ganz besonders bevorzugt weniger als 0,1 Gew.-% eines chemischen oder physikalischen Treibmittels. Ganz besonders bevorzugt enthalten die Polyurethanschäume gar kein physikalisches oder chemisches Treibmittel.

Wie bereits beschrieben ist die Verwendung der erfindungsgemäßen Polyether-Siloxan Block-Copolymere zur Herstellung von Polyurethan-Schlagschäumen ein besonders bevorzugter Gegenstand der vorliegenden Erfindung. Bevorzugt lassen sich solche Polyurethan-Schlagschäume durch ein Verfahren herstellen umfassend die Schritte
a) Bereitstellen einer Polyol-Komponente, einer Isocyanat-Komponente, mindestens eines der erfindungsgemäßen Polyether-Siloxan Block-Copolymere sowie ggf. weitere Additive
b) Vermischung aller Komponenten zur einer homogenen Mischung
c) mechanisches Aufschäumen der Mischung unter Einbringen eines Gases, wie z.B. Luft oder Stickstoff, zu einem homogenen, feinzelligen Schaum
d) Aufbringen der aufgeschäumten Reaktionsmischung auf ein Substrat
e) Aushärten der aufgeschäumten Reaktionsmischung

Es wird klargestellt, dass die Verfahrensschritte dieses Verfahrens wie oben dargestellt keiner festen zeitlichen Abfolge unterworfen sind. So können beispielsweise Verfahrensschritt b) und c) zeitgleich stattfinden, sprich einzelne Komponenten werden erst während des Aufschäumvorgangs zur Reaktionsmischung gegeben und mit dieser vermischt. Auch können einzelne Additive, wie z.B. der Katalysator, erst nach dem Verfahrensschritt c) zur mechanisch aufgeschäumten Reaktionsmischung gegeben werden.

Es entspricht einer bevorzugten Ausführungsform der vorliegenden Erfindung, wenn im Verfahrensschritt c) die Reaktionsmischung aus Polyol, Isocyanat und ggf. weiteren Additiven durch das Aufbringen hoher Scherkräfte aufgeschäumt wird. Das Aufschäumen kann hierbei unter Zuhilfenahme von dem Fachmann geläufigen Scheraggregaten wie z.B. Dispermaten, Dissolvern, Hansa-Mixern oder Oakes-Mixern erfolgen.

Weiterhin ist es bevorzugt, wenn die mechanisch aufgeschäumte Reaktionsmischung nach dem Verfahrensschritt c) eine Dichte im Bereich von 50 - 1000 g/l, bevorzug im Bereich von 75 - 600 g/l, besonders bevorzugt im Bereich von 100 - 450 g/l aufweist.

Im Verfahrensschritt d) kann die Reaktionsmischung auf nahezu jedes beliebige Substrat aufgebracht werden, wie z.B. auf Teppichrückseiten, die Rückseite von Kunstrasen, Klebebeschichtungen, textile Träger, Trenn-Papiere oder Trennfolien sowie auf Metalle, entweder zum permanenten Verbleib auf dem Metall oder zur späteren Entnahme der ausgehärteten Reaktionsmischung.

Es ist weiterhin bevorzugt, wenn im Verfahrensschritt e) die aufgeschäumte Reaktionsmischung bei erhöhter Temperaturen ausgehärtet wird. Erfindungsgemäß bevorzugt sind hierbei Aushärtetemperaturen von min. 50°C, bevorzugt von 60 °C, mehr bevorzugt von mindestens 70°C.

Da die erfindungsgemäßen Polyether-Siloxan Block-Copolymere bei der Herstellung von Polyurethan-Schäumen, insbesondere von Polyurethan-Schlagschäumen große Vorteile bieten, sind mit den beschriebenen Polyether-Siloxan Block-Copolymeren hergestellte Schäume, insbesondere Schlagschäume ein weiterer Gegenstand der vorliegenden Erfindung. Entsprechende Polyurethanschäume können zum Beispiel zur Herstellung von Bodenbelägen wie Teppichen, Trittschalldämmungen oder Kunstrasen, sowie zur Herstellung Textilbeschichtungen, Klebebeschichtungen oder von Dichtungsmaterialien verwendet werden.

### Beispiele

### Synthese-Beispiele:

### Beispiel 1: Synthese OMS 1 (Vergleichsbeispiel)

25,0 g eines Siloxans der allgemeinen Formel (1) mit R¹ = Me und k = 13,2 werden mit 64,5 g eines Polyethers der allgemeinen Formel (3) mit R⁵ = R⁶ = Me, g = 37 und h + i = 18,5 und 89,5 g Isotridecanol in einem 500 mL Dreihalskolben mit KPG-Rührer und Rückflusskühler gemischt. Die Mischung wird unter Stickstoffabdeckung auf 90°C erhitzt. Anschließend werden 0,12 g einer Lösung des Karstedt-Katalysators in Decamethylcyclopentasiloxan (1,5 % Pt) zu dem Reaktionsgemisch gegeben. Es setzt eine exotherme Reaktion ein. Das Reaktionsgemisch wird 4 h lang bei 90°C gerührt.

Es wurde ein klares hochviskoses Produkt erhalten. Das gebildete Polymer besaß eine mittlere Molmasse M_{w} 71.000 g/mol (gemessen mit GPC-System *SECcurity²* der Firma *PCC*, kalibriert gegen Polypropylenglykol).

### Beispiel 2: Synthese OMS 2

15,0 g eines Siloxans der allgemeinen Formel (4) mit R⁷ = R⁸ = Me, R⁹ = H, p = 13,4, q = 0 und o = 0,15 werden mit 38,3 g eines Polyethers der allgemeinen Formel (3) mit R⁵ = R⁶ = Me, g = 36 und h + i = 16,5 und 53,3 g Isotridecanol in einem 250 mL Dreihalskolben mit KPG-Rührer und Rückflusskühler gemischt. Die Mischung wird unter Stickstoffabdeckung auf 90 °C erhitzt. Anschließend werden 0,07 g einer Lösung des Karstedt-Katalysators in Decamethylcyclopentasiloxan (1,5 % Pt) zu dem Reaktionsgemisch gegeben. Es setzt eine exotherme Reaktion ein. Das Reaktionsgemisch wird 4 h lang bei 90°C gerührt.

Es wurde ein klares hochviskoses Produkt erhalten. Das gebildete Polymer besaß eine mittlere Molmasse M_{w} 85.000 g/mol (gemessen mit GPC-System *SECcurity²* der Firma *PCC*, kalibriert gegen Polypropylenglykol).

### Beispiel 3: Synthese OMS 3

15,0 g eines Siloxans der allgemeinen Formel (4) mit R⁷ = Me, R⁸ = Phenyl, R⁹ = H, p = q = 13,4 und o = 0,05 werden mit 34,9 g eines Polyethers der allgemeinen Formel (3) mit R⁵ = R⁶ = Me, g = 36 und h + i = 16,5 und 49,9 g Isotridecanol in einem 250 mL Dreihalskolben mit KPG-Rührer und Rückflusskühler gemischt. Die Mischung wird unter Stickstoffabdeckung auf 90 °C erhitzt. Anschließend werden 0,07 g einer Lösung des Karstedt-Katalysators in Decamethylcyclopentasiloxan (1,5 % Pt) zu dem Reaktionsgemisch gegeben. Es setzt eine exotherme Reaktion ein. Das Reaktionsgemisch wird 4 h lang bei 90°C gerührt.

Es wurde ein klares hochviskoses Produkt erhalten. Das gebildete Polymer besaß eine mittlere Molmasse M_{w} 78.000 g/mol (gemessen mit GPC-System *SECcurity²* der Firma *PCC*, kalibriert gegen Polypropylenglykol).

### Beispiel 4: Synthese OMS 4

12,8 g eines Siloxans der allgemeinen Formel (1) mit R¹ = Me und k = 13,2 werden mit 2,3 g eines Siloxans der allgemeinen Formel (2) mit R² = R³ = Me, R⁴ = H, m = 13,2, I = 1, n = 0 und 38,3 g eines Polyethers der allgemeinen Formel (3) mit R⁵ = R⁶ = Me, g = 37 und h + i = 18,5 und 53,4 g Isotridecanol in einem 250 mL Dreihalskolben mit KPG-Rührer und Rückflusskühler gemischt. Die Mischung wird unter Stickstoffabdeckung auf 90 °C erhitzt. Anschließend werden 0,12 g einer Lösung des Karstedt-Katalysators in Decamethylcyclopentasiloxan (1,5 % Pt) zu dem Reaktionsgemisch gegeben. Es setzt eine exotherme Reaktion ein. Das Reaktionsgemisch wird 4 h lang bei 90 °C gerührt.

Es wurde ein klares hochviskoses Produkt erhalten. Das gebildete Polymer besaß eine mittlere Molmasse M_{w} 79.000 g/mol (gemessen mit GPC-System *SECcurity²* der Firma *PCC*, kalibriert gegen Polypropylenglykol).

### Beispiel 5: Synthese OMS 5

12,8 g eines Siloxans der allgemeinen Formel (I) mit R¹ = Me und k = 13,2 werden mit 2,3 g eines Siloxans der allgemeinen Formel (2) mit R² = R³ = Me, R⁴ = H, m = 13,2, I = 1, n = 0 und 28,0 g eines Polyethers der allgemeinen Formel (3) mit R⁵ = R⁶ = Me, g = 20 und h + i = 16 und 43,1 g Dodecylbenzol in einem 250 mL Dreihalskolben mit KPG-Rührer und Rückflusskühler gemischt. Die Mischung wird unter Stickstoffabdeckung auf 90 °C erhitzt. Anschließend werden 0,12 g einer Lösung des Karstedt-Katalysators in Decamethylcyclopentasiloxan (1,5 % Pt) zu dem Reaktionsgemisch gegeben. Es setzt eine exotherme Reaktion ein. Das Reaktionsgemisch wird 4 h lang bei 90 °C gerührt.

Es wurde ein klares hochviskoses Produkt erhalten. Das gebildete Polymer besaß eine mittlere Molmasse M_{w} 72.000 g/mol (gemessen mit GPC-System *SECcurity²* der Firma *PCC*, kalibriert gegen Polypropylenglykol).

### Beispiel 6: Synthese OMS 6

19,0 g eines Siloxans der allgemeinen Formel (4) mit R⁷ = R⁸ = Me, R⁹ = H, p = 18,0, q = 0 und o = 0,17 werden mit 39,0 g eines Polyethers der allgemeinen Formel (3) mit R⁵ = R⁶ = Me, g = 36 und h + i = 16,5 und 58 g Isotridecanol in einem 250 mL Dreihalskolben mit KPG-Rührer und Rückflusskühler gemischt. Die Mischung wird unter Stickstoffabdeckung auf 90 °C erhitzt. Anschließend werden 0,08 g einer Lösung des Karstedt-Katalysators in Decamethylcyclopentasiloxan (1,5 % Pt) zu dem Reaktionsgemisch gegeben. Es setzt eine exotherme Reaktion ein. Das Reaktionsgemisch wird 4 h lang bei 90 °C gerührt.

Es wurde ein klares hochviskoses Produkt erhalten. Das gebildete Polymer besaß eine mittlere Molmasse M_{w} 81.000 g/mol (gemessen mit GPC-System *SECcurity²* der Firma *PCC*, kalibriert gegen Polypropylenglykol).

### Polyurethan-Formulierungen:

Zur Beurteilung der Wirksamkeit von Polyether-Siloxan Block-Copolymeren als Stabilisator für die Herstellung von Polyurethan-Schlagschäumen, wurde eine Reihe an Testverschäumungen in verschiedenen Polyurethan-Formulierungen durchgeführt. Für diese wurden die in der Tabellen 1 aufgelisteten Polyole genutzt.

**Tabelle1: Übersicht über in Verschäumungsexperimenten verwendete Polyole**

| **Polyol** | **Hersteller / Lieferant** | **Zusammensetzung** |
|---|---|---|
| Voranol CP 3322 | Dow | EO/PO-Polyetherpolyol OHZ = 48 mg KOH/g; f ≈ 3 |
| Voranol CP 755 | Dow | Polyetherpolyol OHZ = 247 mg KOH/g; f ≈ 3 |
| Voranol P 400 | Dow | Polypropyleng lykol OHZ = 267 mg KOH/g; f ≈ 2 |
| Voranol 2000 L | Dow | EO/PO-Polyetherpolyol OHZ = 56 mg KOH/g; f ≈ 2 |
| Voralux HL 109 | Dow | SAN-Polymer Polyetherpolyol OHZ = 42 mg KOH/g; f ≈ 3 |
| Voralux HN 360 | Dow | SAN-Polymer Polyetherpolyol OHZ = 30 mg KOH/g, f ≈ 3 |
| Capa 2054 | Perstorp | Caprolacton-basiertes Polyesterpolyol OHZ = 204 mg KOH/g, f = 2 |
| DPG | Sigma Aldrich | Dipropylenglykol OHZ = 836 mg KOH/g, f = 2 |

Zusätzlich wurden für Testverschäumungen folgende Substanzen verwendet:
- Kosmos N 200: Nickel(II)-Acetylacetonat in Polyol (Katalysator), von der Firma Evonik Nutrition & Care GmbH
- Omya BLS: Calciumcarbonat (Füllstoff), von der Firma Omya GmbH
- Suprasec 6506: Polymeres MDI (NCO-% = 29,3 %) von der Firma Huntsman

Tabelle 2 gibt einen detaillierten Überblick über die in den Testverschäumungen verwendeten Polyurethan-Formulierungen.

**Tabelle 2: Polyurethan-Formulierungen; alle Angaben in Gewichtsteilen**

| **Substanz** | **F1** | **F2** | **F3** | **F4** |
|---|---|---|---|---|
| Voranol CP 3322 | 140 | 140 | - | - |
| Voranol CP 755 | - | - | 7 | 7 |
| Voranol P 400 | - | - | 20 | 20 |
| Voranol 2000 L | - | - | 111 | 111 |
| Voralux HL 109 | - | - | 16 | 16 |
| Voralux HN 360 | 60 | 60 | - | - |
| Capa 2054 | - | - | 32 | 32 |
| DPG | 30 | 30 | 26 | 26 |
| CaCO3 | - | 100 | - | 100 |
| Kosmos N 200 | 4 | 4 | 4 | 4 |
| Stabilisator | 4 | 4 | 4 | 4 |
| Suprasec 6506 | 90 NCO-Index = 105 | 90 NCO-Index = 105 | 114 NCO-Index = 104 | 90 NCO-Index = 104 |

### Beispiel 7: Handverschäumung

Handverschäumungen wurden mit einem Dissolver, Modell *Dispermat*® *LC75* von der Firma *VMA-Getzman,* ausgerüstet mit einer Dissolverscheibe, Ø = 6 cm, durchgeführt. Hierfür wurden zunächst Polyole, Stabilisator, Katalysator und ggf. Calcium-Carbonat im entsprechenden Verhältnis in einen 1000 ml Plastikbecher eingewogen und bei ca. 500 rpm für 3 min. zu einer homogenen Mischung verrührt. Anschließend wurde Isocyanat hinzugegeben und die Mischung für 3 min. bei 2200 rpm aufgeschäumt. Hierbei wurde darauf geachtet, dass die Dissolver-Scheibe stets soweit in die Mischung eintauchte, dass eine ordentliche Trombe gebildet wurde. Die Dichte der so aufgeschäumten Reaktionsmischung wurde als ein Bewertungskriterium für die Wirksamkeit des Schaumstabilisators herangezogen. Die aufgeschäumte Reaktionsmischung wurde anschließend mit einem Filmziehgerät, *Typ AB3220* der Firma TQC, ausgerüstet mit einem 2 mm Rundrakel, auf ein beschichtetes Trennpapier aufgestrichen und für 15 min. bei 120 °C ausgehärtet. Zellstruktur und Zellhomogenität des ausgehärteten Schaums waren ein weiteres Bewertungskriterium für die Wirksamkeit des Schaumstabilisators.

Die Formulierungen F1 - F4 wurden gemäß diesem Verfahren verschäumt; die Ansatzgröße der jeweiligen Versuche betrug stets ca. 330 g im Falle von ungefüllten Formulierungen bzw. ca. 430 g im Falle von CaCO₃-haltigen Formulierungen. Für diese Versuche wurde sowohl das in Vergleichsbeispiel 1 beschrieben unvernetzte als auch die in den Beispielen 2,3 und 6 beschriebenen vernetzten Polyether-Siloxan Block-Copolymer als Stabilisator verwendet. Tabelle 3 gibt einen Überblick über die Dichten der aufgeschäumten Reaktionsmischungen, die in diesen Versuchen nach dem Aufschäumen erhalten wurden.

**Tabelle 3: Resultate von Handverschäumungen**

| | **F1** | **F2** | **F3** | **F4** |
|---|---|---|---|---|
| **Unvernetztes Polyether-Siloxan Block-Copolymer aus Beispiel 1** | | | | |
| Dichte nach dem Aufschäumen | 610 g/l | 715 g/l | 600 g/l | 650 g/l |

| **Vernetztes Polyether-Siloxan Block-Copolymer aus Beispiel 2** | | | | |
|---|---|---|---|---|
| Dichte nach dem Aufschäumen | 570 g/l | 685 g/l | 490 g/l | 590 g/l |

| **Vernetztes Polyether-Siloxan Block-Copolymer aus Beispiel 3** | | | | |
|---|---|---|---|---|
| Dichte nach dem Aufschäumen | 560 g/l | 690 g/l | 450 g/l | 580 g/l |

| **Vernetztes Polyether-Siloxan Block-Copolymer aus Beispiel 6** | | | | |
|---|---|---|---|---|
| Dichte nach dem Aufschäumen | 580 g/l | 700 g/l | 510 g/l | 610 g/l |

Wie aus dieser Zusammenstellung zu sehen ist, konnten mit den erfindungsgemäßen vernetzten Polyether-Siloxan Block-Copolymer in allen Fällen geringere Schaumdichten erhalten werden. Bei der Bewertung der ausgehärteten Schaumproben fiel zudem auf, dass Proben, die mit den erfindungsgemäßen Siloxan hergestellt wurden, eine feinere und homogenere Zellstruktur aufwiesen. Beides ist ein Beleg für die bessere Wirksamkeit dieser Strukturen als Schaumstabilisator für die Herstellung von Polyurethan-Schlagschäumen.

### Beispiel 8: Maschinen-Verschäumungen:

Maschinen-Verschäumungen wurden mit einem vollautomatischen Labor-Schaumgenerator, Typ *Pico-Mix XL* von der Firma *Hansa-Mixer,* ausgerüstet mit 2 separaten Exzenterschnecken-Trichterpumpen, durchgeführt. Hierfürwurde zunächst eine Vormischung (Ansatzgröße ca. 5 kg) aus Polyolen, Stabilisator, Katalysator und ggf. Calcium-Carbonat hergestellt und anschließend in eine der beiden Trichterpumpen des Schaumgenerators gefüllt. Die andere Trichterpumpe wurde mit der Isocyanat-Komponente befüllt. Für Verschäumungsexperimente wurden Polyol-Vormischung und Isocyanat gleichzeitig in den Mischkopf des Schaumgenerators eingedüst und dort durch gleichzeitiges Einleiten von Luft aufgeschäumt. Der Mischkopf wurde hierbei bei allen Experimenten bei 850 rpm betrieben. Die Förderleistungen der beiden Trichterpumpen wurde stets so eingestellt, dass Polyol und Isocyanat im passenden Verhältnis (entsprechend dem NCO-Index der jeweiligen Formulierung) in den Mischkopf eingedüst wurden, der Gesamtmassenfluss betrug in etwa 5-8 kg/h (abhängig von der gewählten Formulierung, vom Füllstoffgehalt etc.). Der Luftstrom in den Mischkopf wurde so gewählt, dass nach dem Aufschäumen Schaumdichten von 200 und 400 g/l erhalten wurden. Die Homogenität und Stabilität des erhaltenen Schaums nach Austritt aus dem Mischkopf war ein Bewertungskriterium für die Wirksamkeit des Schaumstabilisators. Die aufgeschäumte Reaktionsmischung wurde anschließend mit einem Labor-Streichtisch / -Trockner, *Labcoater LTE-S* von der Firma *Mathis AG,* auf ein beschichtetes Trennpapier gestrichen (Schichtstärke ca. 6 mm) und für 15 min. bei 120 °C ausgehärtet. Zellstruktur und Zellhomogenität des ausgehärteten Schaums waren ein weiteres Bewertungskriterium für die Wirksamkeit des Schaumstabilisators.

**Tabelle 4: Resultate von Maschinen-Verschäumungen**

| | **F1** | **F2** | **F3** | **F4** |
|---|---|---|---|---|
| **Unvernetztes Polyether-Siloxan Block-Copolymer aus Beispiel 1** | | | | |
| Schaumstabilität | 0 | 0 | 0 | 0 |
| Schaumhomogenität | 0 | 0 | 0 | 0 |

| **Vernetztes Polyether-Siloxan Block-Copolymer aus Beispiel 2** | | | | |
|---|---|---|---|---|
| Schaumstabilität | ++ | ++ | +++ | ++ |
| Schaumhomogenität | ++ | + | ++ | ++ |

| **Vernetztes Polyether-Siloxan Block-Copolymer aus Beispiel 3** | | | | |
|---|---|---|---|---|
| Schaumstabilität | ++ | + | + | + |
| Schaumhomogenität | + | o | ++ | + |

| **Vernetztes Polyether-Siloxan Block-Copolymer aus Beispiel 4** | | | | |
|---|---|---|---|---|
| Schaumstabilität | +++ | ++ | ++ | + |
| Schaumhomogenität | ++ | + | + | ++ |

| **Vernetztes Polyether-Siloxan Block-Copolymer aus Beispiel 5** | | | | |
|---|---|---|---|---|
| Schaumstabilität | + | 0 | ++ | 0 |
| Schaumhomogenität | + | + | + | ++ |

| **Vernetztes Polyether-Siloxan Block-Copolymer aus Beispiel 5** | | | | |
|---|---|---|---|---|
| Schaumstabilität | + | 0 | + | + |
| Schaumhomogenität | 0 | + | + | 0 |

Die Formulierungen F1 - F4 wurden gemäß diesem Verfahren verschäumt. Für diese Versuche wurden sowohl das in Vergleichsbeispiel 1 beschriebene unvernetzte als auch die in den Beispielen 2-6 beschriebene partiell vernetzten Polyether-Siloxan Block-Copolymere als Stabilisator verwendet. Auch in diesen Versuchen konnte in allen Fällen eine bessere Wirksamkeit der erfindungsgemäßen vernetzten Polyether-Siloxan Block-Copolymere als Stabilisator beobachtet werden. So zeichneten sich die erhaltenen Schäume durch eine höhere Stabilität sowie durch eine feinere und homogenere Zellstruktur aus. Tabelle 4 gibt einen Überblick über die in diesen Versuchen erhaltenen Ergebnisse.

## Patentansprüche

1. Verwendung eines Polyethersiloxan-Block-Copolymers als Additiv zur Herstellung von Polyurethanschäumen, wobei das Polyethersiloxan-Block Copolymer erhältlich ist durch die Umsetzung
a) mindestens eines alpha-omega Wasserstoff-Siloxans der allgemeinen Formel (1) 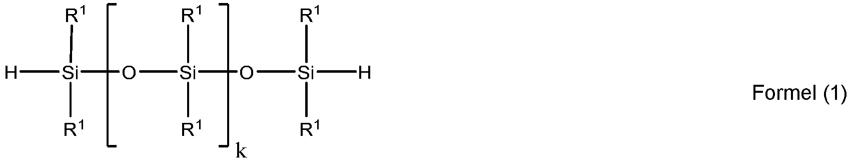 wobei
k = 1 bis 100, bevorzugt 5 bis 50 besonders bevorzugt 7 bis 30 ganz besonders bevorzugt 8 - 20 ist und
wobei die Reste R¹ unabhängig voneinander gleiche oder verschiedene einwertige aliphatische oder aromatische Kohlenwasserstoffreste mit 1 bis 20 Kohlenstoffatomen, bevorzugt mit 1 bis 10 Kohlenstoffatomen, ganz besonders bevorzugt Methylreste sind,
b) sowie mindestens eines höherwertigen Wasserstoff-Siloxans der allgemeines Formel (2) 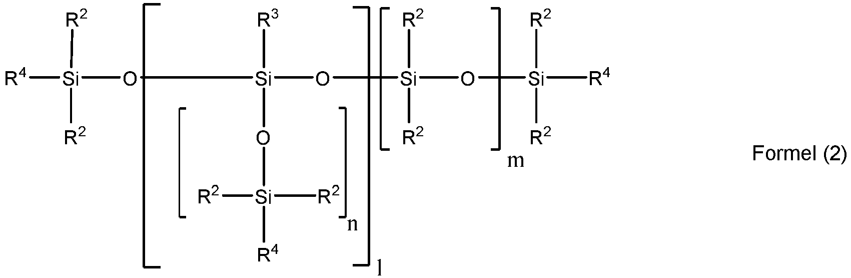 wobei
I = 1 bis 10, bevorzugt 1 bis 5 besonders bevorzugt 1
m = 0 bis 100, bevorzugt 5 bis 50, besonders bevorzugt 7 bis 30 ganz besonders bevorzugt 8 -20
n = 0 bis 100, bevorzugt 0 bis 50, besonders bevorzugt 0 ist und
wobei die Reste R² unabhängig voneinander gleiche oder verschiedene einwertige aliphatische oder aromatische Kohlenwasserstoffreste mit 1 bis 20 Kohlenstoffatomen, bevorzugt mit 1 bis 10 Kohlenstoffatomen, ganz besonders bevorzugt Methylreste sind, und
wobei die Reste R³ unabhängig voneinander gleiche oder verschiedene einwertige aliphatische oder aromatische Kohlenwasserstoffreste mit 1 bis 20 Kohlenstoff-atomen, bevorzugt Methyl- oder Phenylreste sind, und
wobei die Reste R⁴ unabhängig voneinander gleiche oder verschiedene einwertige aliphatische oder aromatische Kohlenwasserstoffreste mit 1 bis 20 Kohlenstoffatomen, oder H sind, unter der Maßgabe, dass mindestens drei, vorzugsweise alle Reste R⁴ Wasserstoffatome sind,
c) mit mindestens einem Polyether der allgemeines Formel (3) 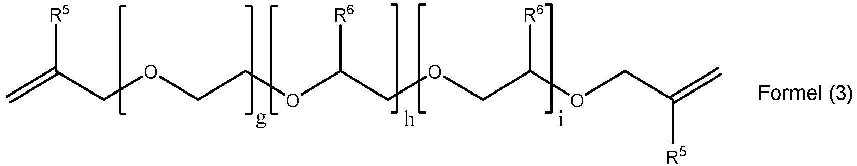 wobei
g = 0 bis 100, bevorzugt 5 bis 75, besonders bevorzugt 10 bis 50
h = 0 bis 100, bevorzugt 5 bis 75, besonders bevorzugt 5 bis 25
i = 0 bis 100, bevorzugt 5 bis 75, besonders bevorzugt 5 bis 25 und
wobei die Reste R⁵ unabhängig voneinander gleiche oder verschiedene einwertige aliphatische gesättigte oder ungesättigte Kohlenwasserstoffreste mit 1 bis 20 Kohlenstoffatomen oder H sind, wobei insbesondere Methylreste bevorzugt sind, und wobei die Reste R⁶ unabhängig voneinander gleiche oder verschiedene einwertige aliphatische oder aromatische Kohlenwasserstoffreste mit 1 bis 20 Kohlenstoffatomen, bevorzugt Methylreste sind,
in Gegenwart eines Hydrosilylierungskatalysators (d), wobei die Reaktion optional, vorzugsweise obligatorisch in einem Lösemittel (e) durchgeführt wird.

2. Verwendung gemäß Anspruch 1, **dadurch gekennzeichnet, dass** das höherwertige Wasserstoff-Siloxan (b) in einer Konzentration von 3 - 25, bevorzugt von 5 - 20, besonders bevorzugt von 7,5 - 15 mol-% bezogen auf die Mischung der beiden Wasserstoff-Siloxane (a) und (b) eingesetzt wird.

3. Verwendung gemäß mindestens einem der Ansprüche 1 und 2, **dadurch gekennzeichnet, dass** der Polyether (c) in einer solchen Konzentration eingesetzt wird, dass das molare Verhältnis an polyether-gebundenden Doppelbindungen zu siloxan-gebundenen Si-H-Gruppen im Bereich von 0,95 : 1,05, bevorzugt im Bereich von 0,97 : 1,03, besonders bevorzugt im Bereich von 0,99 : 1,01 liegt.

4. Verwendung gemäß mindestens einem der Ansprüchen 1 bis 3, **dadurch gekennzeichnet, dass** der zur Umsetzung verwendete Hydrosilylierungskatalysator (d) ausgewählt ist aus der Gruppe der Platin-Katalysatoren, insbesondere der Platin(0)-Katalysatoren bevorzugt, wobei insbesondere Platin(0)-Katalysatoren in Form des Karstedt-Katalysators ganz besonders bevorzugt sind.

5. Verwendung gemäß mindestens einem der Ansprüche 1 bis 4, **dadurch gekennzeichnet, dass** das Polyethersiloxan ein mittleres Molgewicht Mw bestimmbar durch GPC, von min. 60.000 g/mol, bevorzugt von min. 70.000 g/mol, besonders bevorzugt von min. 80.000 g/mol, aufweist.

6. Verwendung gemäß mindestens einem der Ansprüche 1 bis 5, wobei alpha-omega Wasserstoff-Siloxan und höherwertiges Wasserstoff-Siloxan nicht separat bereitgestellt werden, sondern durch Äquilibrierung direkt eine Siloxanzusammensetzung enthaltend alpha-omega Wasserstoff-Siloxan und höherwertiges Wasserstoff-Siloxan bereitgestellt wird, welcher der allgemeinen Formel (4) entspricht, 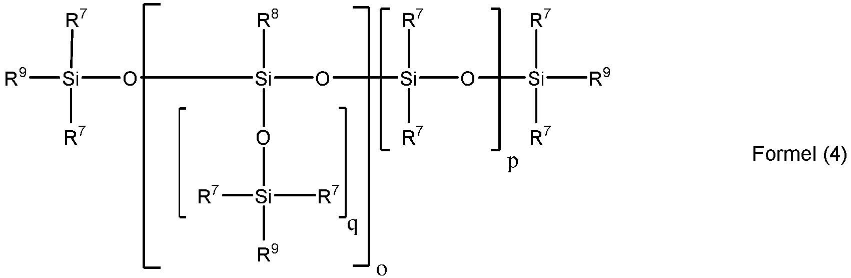 wobei
o = 0,01 bis 0,7, bevorzugt 0,05 bis 0,5 besonders bevorzugt 0,075 bis 0,25
p = 0 bis 100, bevorzugt 5 bis 50, besonders bevorzugt 7 bis 30 ganz besonders bevorzugt 8 - 20
q = 0 bis 100, bevorzugt 0 - 50, besonders bevorzugt 0 ist und
wobei die Reste R⁷ unabhängig voneinander gleiche oder verschiedene einwertige aliphatische oder aromatische Kohlenwasserstoffreste mit 1 bis 20 Kohlenstoffatomen, bevorzugt mit 1 bis 10 Kohlenstoffatomen, ganz besonders bevorzugt Methylreste sind, und
wobei die Reste R⁸ unabhängig voneinander gleiche oder verschiedene einwertige aliphatische oder aromatische Kohlenwasserstoffreste mit 1 bis 20 Kohlenstoff-atomen, bevorzugt Methyl- oder Phenylreste sind, und
wobei die Reste R⁹ unabhängig voneinander gleiche oder verschiedene einwertige aliphatische oder aromatische Kohlenwasserstoffreste mit 1 bis 20 Kohlenstoffatomen, oder H sind, unter der Maßgabe, dass mindestens 50 %, bevorzugt 65 %, besonders bevorzugt mindestens 80 % der Reste R⁹ Wasserstoffatome sind,
und welche dann direkt mit einem Polyether der allgemeinen Formel (3) umgesetzt wird.

7. Verwendung gemäß mindestens einem der Ansprüche 1 bis 6, **dadurch gekennzeichnet, dass** die Umsetzung der Wasserstoff-Siloxane (a) und (b) mit dem Polyether (c) in Gegenwart eines Hydrosilylierungskatalysators (d), obligatorisch in einem Lösemittel stattfindet, wobei dieses bevorzugt ausgewählt ist aus Alkylbenzol, Alkohole, vorzugsweise mit mindestens 10 Kohlenstoffatomen, langkettigen Fettsäure Estern, Polyethern, sowie Mischungen dieser Substanzen, wobei insbesondere Isotridecanol, Dodecanol sowie Isopropylstearat als Lösemittel bevorzugt sind.

8. Verwendung gemäß mindestens einem der Ansprüche 1 bis 7, wobei es sich bei dem herzustellenden Polyurethanschaum um einen mechanisch geschäumten Polyurethanschaum handelt, welcher weniger als 2 Gew.-%, bevorzugt weniger als 1 Gew.-%, besonders bevorzugt weniger als 0,5 Gew.-%, ganz besonders bevorzugt weniger als 0,1 Gew.-% eines chemischen oder physikalischen Treibmittels enthält.

9. Verwendung gemäß mindestens einem der Ansprüche 1 bis 8, wobei das Polyethersiloxan-Block-Copolymer in einer Konzentration von 0,05 - 10 Gew.-%, bevorzugt von 0,1 - 7,5 Gew.-%, besonders bevorzugt von 0,2 - 5 Gew.-% bezogen auf die gesamte Schaumzusammensetzung eingesetzt wird.

10. Verwendung gemäß mindestens einem der Ansprüche 1 bis 9, wobei neben dem Polyethersiloxan-Block-Copolymer noch mindestens ein weiteres Polyethersiloxan der allgemeinen Formel (5) als Additiv eingesetzt wird: 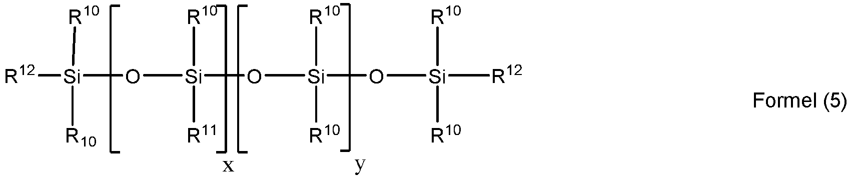 wobei
x = 0 bis 50, bevorzugt 1 bis 25, besonders bevorzugt 2 bis 15
y = 0 bis 250, bevorzugt 5 bis 150, besonders bevorzugt 5 bis 100
wobei die Reste R¹⁰ unabhängig voneinander gleiche oder verschiedene einwertige aliphatische oder aromatische Kohlenwasserstoffreste mit 1 bis 20 Kohlenstoffatomen, bevorzugt mit 1 bis 10 Kohlenstoffatomen, ganz besonders bevorzugt Methylreste sind, und wobei die Reste R¹¹ unabhängig voneinander gleiche oder verschiedene OH-funktionelle oderterminierte, bevorzugt Methyl- oder Acetyl-terminierte Polyoxyalkylenreste, vorzugsweise Polyoxyethylenpolyoxypropylenreste, sind, und wobei die Reste R¹² entweder R¹⁰ oder R¹¹ entsprechen.

11. Verwendung gemäß Anspruch 10, unter der Maßgabe, dass das Polyethersiloxan der allgemeinen Formel (5) in einer Konzentration von 10 - 90 Gew.-%, bevorzugt von 20 - 80 Gew.-%, ganz besonders bevorzugt von 30 - 70 Gew.-%, bezogen auf die Mischung von Polyethersiloxan-Block-Copolymers und Polyethersiloxan der allgemeinen Formel (5), eingesetzt wird.

12. Polyurethanschaum hergestellt nach mindestens einem der Ansprüche 1 bis 11.

13. Verwendung eines Polyurethanschaums gemäß Anspruch 12 zur Herstellung von Bodenbelägen wie Teppichen, Trittschalldämmungen oder Kunstrasen, sowie zur Herstellung von Textilbeschichtungen oder von Dichtungsmaterialien.

## Claims

1. Use of a polyether siloxane block copolymer as additive for producing polyurethane foams, wherein the polyether siloxane block copolymer is obtainable by reacting
a) at least one alpha-omega hydrogen siloxane of general formula (1) 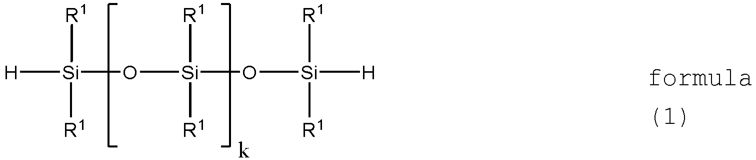 wherein
k = 1 to 100, preferably 5 to 50, particularly preferably 7 to 30, especially preferably 8 - 20 and
wherein the radicals R¹ are each independently identical or different monovalent aliphatic or aromatic hydrocarbon radicals having 1 to 20 carbon atoms, preferably having 1 to 10 carbon atoms, especially preferably methyl radicals,
b) and at least one higher-order hydrogen siloxane of general formula (2) 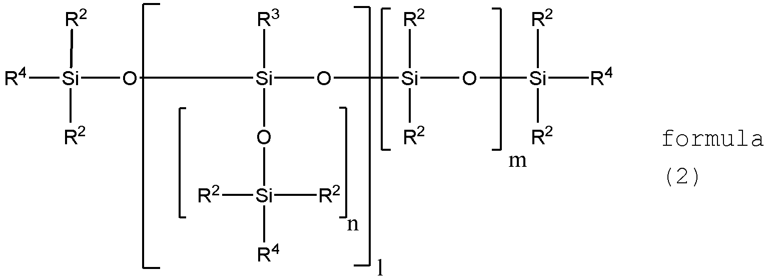 wherein
l = 1 to 10, preferably 1 to 5, particularly preferably 1
m = 0 to 100, preferably 5 to 50, particularly preferably 7 to 30, especially preferably 8 - 20
n = 0 to 100, preferably 0 to 50, particularly preferably 0 and
wherein the radicals R² are each independently identical or different monovalent aliphatic or aromatic hydrocarbon radicals having 1 to 20 carbon atoms, preferably having 1 to 10 carbon atoms, especially preferably methyl radicals, and
wherein the radicals R³ are each independently identical or different monovalent aliphatic or aromatic hydrocarbon radicals having 1 to 20 carbon atoms, preferably methyl or phenyl radicals, and
wherein the radicals R⁴ are each independently identical or different monovalent aliphatic or aromatic hydrocarbon radicals having 1 to 20 carbon atoms, or are H, with the proviso that at least three, preferably all R⁴ radicals are hydrogen atoms,
c) with at least one polyether of general formula (3) 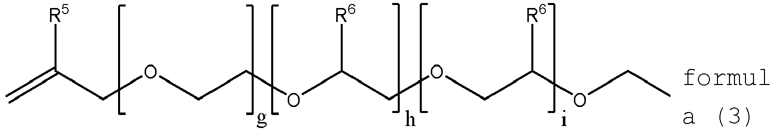 wherein
g = 0 to 100, preferably 5 to 75, particularly preferably 10 to 50
h = 0 to 100, preferably 5 to 75, particularly preferably 5 to 25
i = 0 to 100, preferably 5 to 75, particularly preferably 5 to 25 and
wherein the radicals R⁵ are each independently identical or different monovalent aliphatic saturated or unsaturated hydrocarbon radicals having 1 to 20 carbon atoms or are H, wherein preference is given in particular to methyl radicals, and wherein the radicals R⁶ are each independently identical or different monovalent aliphatic or aromatic hydrocarbon radicals having 1 to 20 carbon atoms, preferably methyl radicals,
in the presence of a hydrosilylation catalyst (d), wherein the reaction is carried out optionally, preferably mandatorily, in a solvent (e).

2. Use according to Claim 1, **characterized in that** the higher-order hydrogen siloxane (b) is used at a concentration of 3 - 25, preferably 5 - 20, particularly preferably 7.5 - 15 mol%, based on the mixture of both hydrogen siloxanes (a) and (b).

3. Use according to at least one of Claims 1 and 2, **characterized in that** the polyether (c) is used at a concentration such that the molar ratio of polyether-bonded double bonds to siloxane-bonded Si-H groups is in the range of 0.95:1.05, preferably in the range of 0.97:1.03, particularly preferably in the range of 0.99:1.01.

4. Use according to at least one of Claims 1 to 3, **characterized in that** the hydrosilylation catalyst (d) used for the reaction is selected from the group of platinum catalysts, the platinum(0) catalysts being particularly preferred, wherein in particular platinum (0) catalysts in the form of the Karstedt catalyst are especially preferred.

5. Use according to at least one of Claims 1 to 4, **characterized in that** the polyether siloxane has an average molar weight Mw, that can be determined by GPC, of at least 60 000 g/mol, preferably of at least 70 000 g/mol, particularly preferably of at least 80 000 g/mol.

6. Use according to at least one of Claims 1 to 5, wherein alpha-omega hydrogen siloxane and higher-order hydrogen siloxane are not provided separately but a siloxane composition comprising alpha-omega hydrogen siloxane and higher-order hydrogen siloxane is provided directly by equilibration, which corresponds to general formula (4), 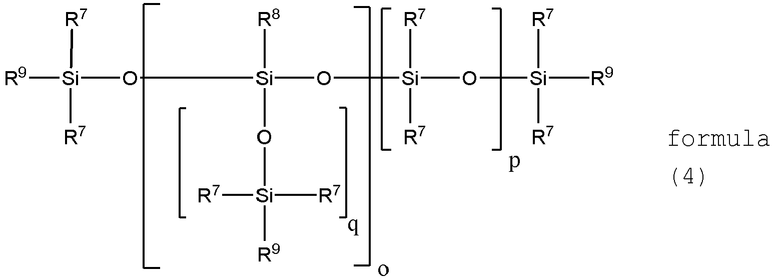 wherein
o = 0.01 to 0.7, preferably 0.05 to 0.5, particularly preferably 0.075 to 0.25
p = 0 to 100, preferably 5 to 50, particularly preferably 7 to 30, especially preferably 8 - 20
q = 0 to 100, preferably 0 - 50, particularly preferably is 0 and
wherein the radicals R⁷ are each independently identical or different monovalent aliphatic or aromatic hydrocarbon radicals having 1 to 20 carbon atoms, preferably having 1 to 10 carbon atoms, especially preferably methyl radicals, and
wherein the radicals R⁸ are each independently identical or different monovalent aliphatic or aromatic hydrocarbon radicals having 1 to 20 carbon atoms, preferably methyl or phenyl radicals, and wherein the radicals R⁹ are each independently identical or different monovalent aliphatic or aromatic hydrocarbon radicals having 1 to 20 carbon atoms, or are H, with the proviso that at least 50%, preferably 65%, particularly preferably at least 80% of the R⁹ radicals are hydrogen atoms,
and which is then reacted directly with a polyether of general formula (3).

7. Use according to at least one of Claims 1 to 6, **characterized in that** the reaction of the hydrogen siloxanes (a) and (b) with the polyether (c) in the presence of a hydrosilylation catalyst (d), takes place mandatorily in a solvent, wherein said solvent is preferably selected from alkylbenzene, alcohols, preferably having at least 10 carbon atoms, long-chain fatty acid esters, polyethers, and also mixtures of these substances, wherein in particular preference is given to isotridecanol, dodecanol and isopropyl stearate as solvent.

8. Use according to at least one of Claims 1 to 7, wherein the polyurethane foam to be produced is a mechanically foamed polyurethane foam, which comprises less than 2% by weight, preferably less than 1% by weight, particularly preferably less than 0.5% by weight, especially preferably less than 0.1% by weight of a chemical or physical blowing agent.

9. Use according to at least one of Claims 1 to 8, wherein the polyether siloxane block copolymer is used at a concentration of 0.05 - 10% by weight, preferably 0.1 - 7.5% by weight, particularly preferably 0.2 - 5% by weight, based on the overall foam composition.

10. Use according to at least one of Claims 1 to 9, wherein, in addition to the polyether siloxane block copolymer, at least one further polyether siloxane of general formula (5) is used as additive: 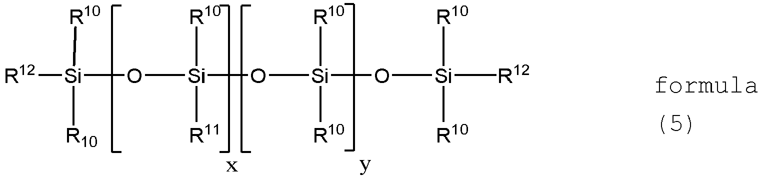 wherein
x = 0 to 50, preferably 1 to 25, particularly preferably 2 to 15
y = 0 to 250, preferably 5 to 150, particularly preferably 5 to 100
wherein the radicals R¹⁰ are each independently identical or different monovalent aliphatic or aromatic hydrocarbon radicals having 1 to 20 carbon atoms, preferably 1 to 10 carbon atoms, especially preferably are methyl radicals, and wherein the radicals R¹¹ are each independently identical or different OH-functional or terminated, preferably methyl- or acetyl-terminated polyoxyalkylene radicals, preferably polyoxyethylenepolyoxypropylene radicals, and wherein the radicals R¹² correspond to either R¹⁰ or R¹¹.

11. Use according to Claim 10, with the proviso that the polyether siloxane of general formula (5) is used at a concentration of 10 - 90% by weight, preferably 20 - 80% by weight, especially preferably 30 - 70% by weight, based on the mixture of polyether siloxane block copolymer and polyether siloxane of general formula (5).

12. Polyurethane foam produced according to at least one of Claims 1 to 11.

13. Use of a polyurethane foam according to Claim 12 for producing floor coverings such as carpets, impact sound insulation or synthetic turf and also for producing textile coatings or sealing materials.

## Revendications

1. Utilisation d'un copolymère séquencé de polyéther-siloxane en tant qu'additif pour la fabrication de mousses de polyuréthane, le copolymère séquencé de polyéther-siloxane pouvant être obtenu par la réaction de
a) au moins un alpha-oméga hydrogéno-siloxane de la formule générale (1) : 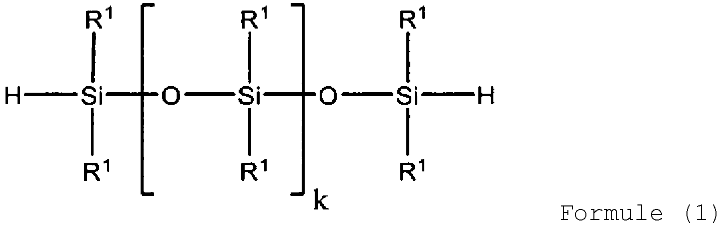 dans laquelle
k = 1 à 100, de préférence 5 à 50, de manière particulièrement préférée 7 à 30, de manière tout particulièrement préférée 8 à 20, et
dans laquelle les radicaux R¹ sont indépendamment les uns des autres des radicaux hydrocarbonés monovalents aliphatiques ou aromatiques identiques ou différents contenant 1 à 20 atomes de carbone, de préférence contenant 1 à 10 atomes de carbone, de manière tout particulièrement préférée des radicaux méthyle,
b) ainsi qu'au moins un hydrogéno-siloxane de valence supérieure de la formule générale (2) : 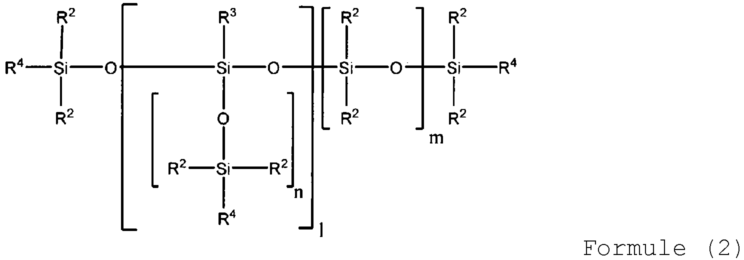 dans laquelle
1 = 1 à 10, de préférence 1 à 5, de manière particulièrement préférée 1,
m = 0 à 100, de préférence 5 à 50, de manière particulièrement préférée 7 à 30, de manière tout particulièrement préférée 8 à 20,
n = 0 à 100, de préférence 0 à 50, de manière particulièrement préférée 0, et
dans laquelle les radicaux R² sont indépendamment les uns des autres des radicaux hydrocarbonés monovalents aliphatiques ou aromatiques identiques ou différents contenant 1 à 20 atomes de carbone, de préférence contenant 1 à 10 atomes de carbone, de manière tout particulièrement préférée des radicaux méthyle, et
dans laquelle les radicaux R³ sont indépendamment les uns des autres des radicaux hydrocarbonés monovalents aliphatiques ou aromatiques identiques ou différents contenant 1 à 20 atomes de carbone, de préférence des radicaux méthyle ou phényle, et
dans laquelle les radicaux R⁴ sont indépendamment les uns des autres des radicaux hydrocarbonés monovalents aliphatiques ou aromatiques identiques ou différents contenant 1 à 20 atomes de carbone, ou H, à condition qu'au moins trois, de préférence tous les radicaux R⁴ soient des atomes d'hydrogène,
c) avec au moins un polyéther de la formule générale (3) : 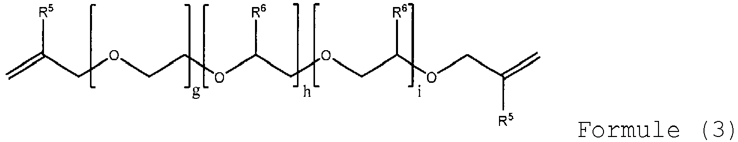 dans laquelle
g = 0 à 100, de préférence 5 à 75, de manière particulièrement préférée 10 à 50,
h = 0 à 100, de préférence 5 à 75, de manière particulièrement préférée 5 à 25,
i = 0 à 100, de préférence 5 à 75, de manière particulièrement préférée 5 à 25, et
dans laquelle les radicaux R⁵ sont indépendamment les uns des autres des radicaux hydrocarbonés monovalents aliphatiques saturés ou insaturés identiques ou différents contenant 1 à 20 atomes de carbone, ou H, les radicaux méthyle étant notamment préférés, et dans laquelle les radicaux R⁶ sont indépendamment les uns des autres des radicaux hydrocarbonés monovalents aliphatiques ou aromatiques identiques ou différents contenant 1 à 20 atomes de carbone, de préférence des radicaux méthyle,
en présence d'un catalyseur d'hydrosilylation (d), la réaction étant éventuellement, de préférence obligatoirement, réalisée dans un solvant (e).

2. Utilisation selon la revendication 1, **caractérisée en ce que** l'hydrogéno-siloxane de valence supérieure (b) est utilisé en une concentration de 3 à 25, de préférence de 5 à 20, de manière particulièrement préférée de 7,5 à 15 % en moles, par rapport au mélange des deux hydrogéno-siloxanes (a) et (b).

3. Utilisation selon au moins l'une quelconque des revendications 1 et 2, **caractérisée en ce que** le polyéther (c) est utilisé en une concentration telle que le rapport molaire entre les doubles liaisons reliées à un polyéther et les groupes Si-H reliés à un siloxane se situe dans la plage allant de 0,95:1,05, de préférence dans la plage de 0,97:1,03, de manière particulièrement préférée dans la plage de 0,99:1,01.

4. Utilisation selon au moins l'une quelconque des revendications 1 à 3, **caractérisée en ce que** le catalyseur d'hydrosilylation (d) utilisé pour la réaction est choisi dans le groupe des catalyseurs à base de platine, les catalyseurs à base de platine (0) étant notamment préférés, les catalyseurs à base de platine(0) sous la forme du catalyseur de Karstedt étant notamment tout particulièrement préférés.

5. Utilisation selon au moins l'une quelconque des revendications 1 à 4, **caractérisée en ce que** le polyéther-siloxane présente un poids moléculaire moyen Mw, pouvant être déterminé par CPG, d'au moins 60 000 g/mol, de préférence d'au moins 70 000 g/mol, de manière particulièrement préférée d'au moins 80 000 g/mol.

6. Utilisation selon au moins l'une quelconque des revendications 1 à 5, dans laquelle l'alpha-oméga hydrogéno-siloxane et l'hydrogéno-siloxane de valence supérieure ne sont pas préparés séparément, mais plutôt préparés directement par équilibrage d'une composition de siloxanes contenant l'alpha-oméga hydrogéno-siloxane et l'hydrogéno-siloxane de valence supérieure, qui correspond à la formule générale (4) : 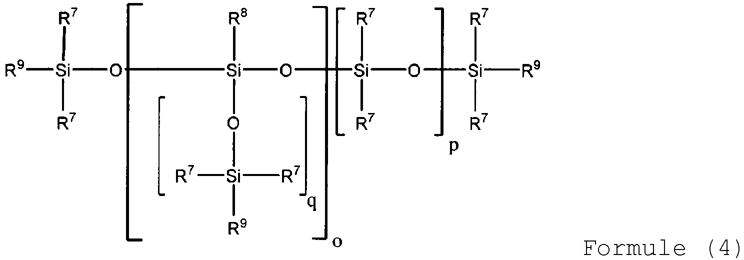 dans laquelle
o = 0,01 à 0,7, de préférence 0,05 à 0,5, de manière particulièrement préférée 0,075 à 0,25,
p = 0 à 100, de préférence 5 à 50, de manière particulièrement préférée 7 à 30, de manière tout particulièrement préférée 8 à 20,
q = 0 à 100, de préférence 0 à 50, de manière particulièrement préférée 0, et
dans laquelle les radicaux R⁷ sont indépendamment les uns des autres des radicaux hydrocarbonés monovalents aliphatiques ou aromatiques identiques ou différents contenant 1 à 20 atomes de carbone, de préférence contenant 1 à 10 atomes de carbone, de manière tout particulièrement préférée des radicaux méthyle, et
dans laquelle les radicaux R⁸ sont indépendamment les uns des autres des radicaux hydrocarbonés monovalents aliphatiques ou aromatiques identiques ou différents contenant 1 à 20 atomes de carbone, de préférence des radicaux méthyle ou phényle, et
dans laquelle les radicaux R⁹ sont indépendamment les uns des autres des radicaux hydrocarbonés monovalents aliphatiques ou aromatiques identiques ou différents contenant 1 à 20 atomes de carbone, ou H, à condition qu'au moins 50 %, de préférence 65 %, de manière particulièrement préférée au moins 80 % des radicaux R⁹ soient des atomes d'hydrogène,
et qui peut alors être mise en réaction directement avec un polyéther de la formule générale (3).

7. Utilisation selon au moins l'une quelconque des revendications 1 à 6, **caractérisée en ce que** la réaction des hydrogéno-siloxanes (a) et (b) avec le polyéther (c) en présence d'un catalyseur d'hydrosilylation (d) a obligatoirement lieu dans un solvant, celui-ci étant de préférence choisi parmi l'alkylbenzène, les alcools, de préférence contenant au moins 10 atomes de carbone, les esters d'acides gras à chaîne longue, les polyéthers, ainsi que les mélanges de ces substances ; l'isotridécanol, le dodécanol, ainsi que le stéarate d'isopropyle étant notamment préférés en tant que solvant.

8. Utilisation selon au moins l'une quelconque des revendications 1 à 7, **caractérisée en ce que** la mousse de polyuréthane à fabriquer consiste en une mousse de polyuréthane moussée mécaniquement, qui contient moins de 2 % en poids, de préférence moins de 1 % en poids, de manière particulièrement préférée moins de 0,5 % en poids, de manière tout particulièrement préférée moins de 0,1 % en poids, d'un agent gonflant chimique ou physique.

9. Utilisation selon au moins l'une quelconque des revendications 1 à 8, dans laquelle le copolymère séquencé de polyéther-siloxane est utilisé en une concentration de 0,05 à 10 % en poids, de préférence de 0,1 à 7,5 % en poids, de manière particulièrement préférée de 0,2 à 5 % en poids, par rapport à la composition de mousse totale.

10. Utilisation selon au moins l'une quelconque des revendications 1 à 9, dans laquelle outre le copolymère séquence de polyéther-siloxane encore au moins un polyéther-siloxane supplémentaire de la formule générale (5) est utilisé en tant qu'additif : 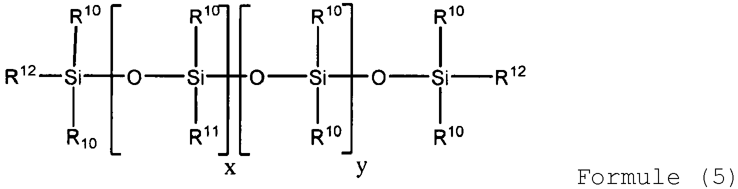 dans laquelle
x = 0 à 50, de préférence 1 à 25, de manière particulièrement préférée 2 à 15,
y = 0 à 250, de préférence 5 à 150, de manière particulièrement préférée 5 à 100,
dans laquelle les radicaux R¹⁰ sont indépendamment les uns des autres des radicaux hydrocarbonés monovalents aliphatiques ou aromatiques identiques ou différents contenant 1 à 20 atomes de carbone, de préférence contenant 1 à 10 atomes de carbone, de manière tout particulièrement préférée des radicaux méthyle, et dans laquelle les radicaux R¹¹ sont indépendamment les uns des autres des radicaux polyoxyalkylène identiques ou différents à fonction OH ou à terminaison, de préférence à terminaison méthyle ou acétyle, de préférence des radicaux polyoxyéthylène-polyoxypropylène, et dans laquelle les radicaux R¹² correspondent à R¹⁰ ou R¹¹.

11. Utilisation selon la revendication 10, à condition que le polyéther-siloxane de la formule générale (5) soit utilisé en une concentration de 10 à 90 % en poids, de préférence de 20 à 80 % en poids, de manière tout particulièrement préférée de 30 à 70 % en poids, par rapport au mélange du copolymère séquencé de polyéther-siloxane et du polyéther-siloxane de la formule générale (5).

12. Mousse de polyuréthane fabriquée selon au moins l'une quelconque des revendications 1 à 11.

13. Utilisation d'une mousse de polyuréthane selon la revendication 12 pour la fabrication de revêtements de sol tels que des tamis, des isolations de bruits de pas ou des gazons artificiels, ainsi que pour la fabrication de revêtements textiles ou de matériaux d'étanchéité.
